# EUROPÄISCHE PATENTANMELDUNG

(11) **EP 4 769 585 A1**
(43) Veröffentlichungstag der Anmeldung: **01.07.2026**
(21) Anmeldenummer: 24223466.4
(22) Anmeldetag: 27.12.2024
(51) Int. Cl.: H01M 10/04, H01M 10/0585

(54) **ANLAGE UND VERFAHREN ZUM AUFBRINGEN EINER KLEBEFOLIE AUF EINER BATTERIEZELLE**

(71) Anmelder: STIWA Automation GmbH, 4800 Attnang-Puchheim (AT)
(72) Erfinder: KURZ-REICHMANN, Gerald, 4691 Schlatt (AT); WIMMER, Martin, 4849 Puchkirchen am Trattberg (AT); STUMPFL, Martin, 4904 Atzbach (AT); SCHIEMER, Stefan, 4870 Pfaffing (AT)
(74) Vertreter: Burger, Hannes Alfred

(57) **Zusammenfassung**

Die Erfindung betrifft eine Anlage zum Aufbringen einer Klebefolie auf einer Batteriezelle (12), mit einer Transporteinrichtung (4) für die Batteriezellen (12) mit mehreren Aufnahmenestem (41) mit Halteeinrichtungen (43, 45) für die Batteriezellen (12), zumindest einer Klebefolien-Bereitstellungseinheit (5), zumindest einer Klebefolien-Anpresseinheit (8) für eine der grossen Oberflächen, zumindest einer Klebefolien-Anpresseinheit (9) für die Schmalseiten und einer Batteriezellen-Wendeeinheit (10).

Die Anlage umfasst weiters eine Ablängeinheit (6) für Endlos-Klebefolie (52) mit einer Schneideeinheit (61) und vorzugsweise einer Greifereinheit (64 bis 66) mit zumindest einem in Folienlängsrichtung verfahrbaren Greifer (64) für die vordere Stirnseite der Klebefolie, eine Manipulatoreinheit für ein abgetrenntes Klebefolien-Blatt (54), wobei die Manipulatoreinheit vertikal verfahrbare Haltereinrichtungen (71, 72) für Vorderende und Hinterende an beiden Seiten des Blattes (54) aufweist, eine Transporteinrichtung (4) derart ausgelegt, dass die Aufnahmenester (41) vertikal unterhalb der Ablängeinheit (6) zu liegen kommen, eine Steuereinheit für Halteeinrichtungen (71, 72), ausgelegt, um Haltereinrichtungen für Vorderende und Hinterende in unterschiedliche Höhe verfahren zu können, und eine Klebefolien-Anpresseinheit (8), die entlang der Transporteinrichtung (4) mit dem Aufnahmenest (41) simultan mitbewegbar ist.

## Beschreibung

Die Erfindung betrifft eine Anlage zum Aufbringen einer Klebefolie auf einer Batteriezelle, gemäss dem Oberbegriff des Anspruchs 1, sowie ein Verfahren unter Verwendung dieser Anlage, gemäss dem Oberbegriff des Anspruchs 10.

Batteriezellen bzw. allgemein Energiespeicherzellen werden beispielsweise zum Aufbau von Traktionsbatterien für Elektro- oder Hybridfahrzeuge verwendet. Diese Zellen weisen typischerweise ein Speicherzellengehäuse auf, in dem eine für den Betrieb der Energiespeicherzelle benötigte Elektroden/Separatoren-Anordnung untergebracht ist, vorzugsweise in Schichtstruktur mit einer Abfolge von Kathodenschichten und Anodenschichten, die jeweils durch eine Separatorschicht voneinander getrennt sind. Zur Herstellung derartiger Elektroden-Separatoren-Anordnungen sind mehrere Verfahren bekannt, denen gemeinsam ist, dass die einzelnen Elektroden- bzw. Separatorenschichten bzw. -lagen nicht fest miteinander verbunden sind. Dies führt zu verschiedenen Nachteilen, denen begegnet wird, indem die Oberfläche der Batteriezelle mit einer Klebefolie abgedeckt und fixiert wird.

Bei vielen derartiger Verfahren eine Klebefolie auf eine Batteriezelle aufzubringen wird ein Klebefolienblatt mit grösseren Abmessungen als einer der Oberflächen der Batteriezelle bereitgestellt und auf eine der Oberflächen aufgepresst wird. Anschliessend erfolgt meist ein Umschlagen und Aufpressen der überstehenden Ränder des Klebefolienblattes auf die angrenzenden Oberflächen, typischerweise die an eine grosse Oberfläche angrenzenden Schmalseiten. Nach einem Wenden der Batteriezelle um 180° können dann diese Vorgänge in gleicher Reihenfolge mit der gewendeten Batteriezelle wiederholt werden.

Beispielsweise offenbart die EP3130018B1 ein Verfahren zum zumindest teilumfänglichen Herstellen einer elektrischen Energiespeicherzelle, umfassend das Bereitstellen der Elektroden/Separatoren-Anordnung und einer selbsthaftenden Kunststofffolie, die auf zumindest einen Teilbereich der Anordnungsoberfläche aufgebracht wird. Das Aufbringen der selbsthaftenden Kunststofffolie erfolgt durch Aufwickeln auf die Elektroden/Separatoren-Anordnung, wobei durch das Aufbringen der selbst-haftenden Kunststofffolie die Schichtstruktur der Elektroden/Separatoren-Anordnung fixiert wird. Die Aufbringungseinheit ist dabei dazu ausgebildet, die selbsthaftende Kunststofffolie durch Aufwickeln aufzubringen. Diese Methode basiert auf dem Z-Falten bzw. auf dem Drehen der Zelle um die eigene Achse, wobei pro Zelle eine durchgehende Folienbahn aufgewickelt und nach dem Aufbringen abgelängt wird.

Das in der US10483505B2 offenbarte Verfahren verwendet einzelne aufzubringende Beschriftungs- bzw. Ummantelungsblätter. Beschrieben ist auch eine Blattbefestigungsvorrichtung zum Anbringen eines Etikettenblatts und eines Ummantelungsblatts an einem Batteriepack mit einer plattenförmigen Batteriezelle, die in einem Packgehäuse montiert ist, wobei die Blattbefestigungsvorrichtung ein erstes Ladegerät zum Bewegen des Batteriepakets in einer Richtung senkrecht zum Bo-den und in einer Richtung parallel zum Boden umfasst, um das Etikettenblatt am Batteriepaket anzubringen. Weiters sind eine erste Spannvorrichtung zum Fixieren des vom ersten Lader bewegten Batteriepakets, ein erster Führungsrahmen, der über Unterroboter mit der ersten Aufspannvorrichtung verbunden ist, um die erste Aufspannvorrichtung zu einer ersten Prozessposition zu führen, sowie eine erste Blattbefestigungsvorrichtung zum Befestigen des Etikettenblatts an einer Oberfläche des auf der ersten Vorrichtung geladenen Batteriesatzes vorgesehen. Ein Rotator ist zum Drehen des Batteriesatzes vorgesehen, an dessen einer Oberfläche das Etikettenblatt befestigt ist, um 180 Grad nach oben und unten. Mittels einer Andrückrolle wird ein unbefestigter Teil des Etikettenbogens, der nicht am Batteriepack befestigt wurde, an eine Außenfläche des Batteriepacks angepresst, bevor eine zweite Ladevorrichtung zum Bewegen des Batteriepakets in einer Richtung senkrecht zum Boden und in einer Richtung parallel zum Boden eingesetzt wird, um die Ummantelungsfolie an dem Batteriepaket zu befestigen, wobei die zweite Ladevorrichtung das Batteriepaket von der Andruckrolle aufnimmt. Förderer dienen zum Transportieren des Batteriesatzes mit dem daran angebrachten Etikettenbogen, auch ist ein zweiter Führungsrahmen vorgesehen, der über Unterroboter mit der zweiten Aufspannvorrichtung verbunden ist, um die zweite Aufspann-vorrichtung zu einer zweiten Prozessposition zu führen. Schliesslich dient eine zweite Blattbefestigungsvorrichtung zum Befestigen der Ummantelungsplatte an einer gegenüberliegenden Oberfläche des Batteriesatzes, an der das Etiketten-blatt befestigt ist, das auf die zweite Vorrichtung geladen wird.

Die DE102014117866B4 offenbart ein Verpackungsverfahren zum Aufbringen einer Isolierverpackung auf einer Batteriezelle, dadurch gekennzeichnet, dass ein Isoliermaterial-Zuschnitt aus einem selbstklebenden und flexiblen Band oder einer selbstklebenden und flexiblen Folie bereitgestellt und mittels eines Manipulators auf das Gehäuse der Batteriezelle zur Bildung der Isolierverpackung aufgefalzt wird. Dabei wird die Batteriezelle durch einen Manipulator aufgenommen, bewegt und an dem Isoliermaterial-Zuschnitt angesetzt, der zuvor an einer Bereitstellungsvorrichtung zur Bildung des Isoliermaterial-Zuschnitts von einem Band abgelängt wird, indem ein Ende des Isoliermaterialbands durch einen Manipulator mit einem Handhabungswerkzeug an einem Vorlagebereich aufgenommen und in die für das Ablängen vorgesehene Position bewegt wird.

Der Isoliermaterial-Zuschnitt wird durch den Manipulator mit dem Handhabungs-werkzeug zu einer Beschneidungsstation bewegt und dort mit Ausschnitten versehen, um in dem Zuschnitt separat anfalzbare Flächenbereiche zu bilden. Dann wird der Zuschnitt neben einem Falztisch positioniert.

Mittels eines Manipulators wird ein Gehäuse einer Batteriezelle an einen auf dem Handhabungswerkzeug gehaltenen Isoliermaterial-Zuschnitt haftend angelegt und die Batteriezelle wird unter Mitnahme des Isoliermaterial-Zuschnitts auf den Falz-tisch und mit dem haftend angelegten Isoliermaterial-Zuschnitt in eine Einführöffnung des Falztisches bewegt, wobei randseitig an der Einführöffnung angeordnete Falzkanten und/oder Anpressrollen und/oder anlegbare Falzspatel Teilflächen des Isoliermaterial-Zuschnitts an das Gehäuse anfalzen. Weiters kann die Batteriezelle mit einem zumindest teilweise haftend angelegten Isoliermaterial-Zuschnitt zu einem Falzdorn bewegt und an diesem entlang geführt wird, um weitere Teilflächen des Isoliermaterial-Zuschnitts an das Gehäuse anzufalzen. Natürlich können an einer Batteriezelle zwei oder mehr Isoliermaterial-Zuschnitte zur Bildung der Verpackung überlagernd aufgebracht werden.

Gemäss dem Verfahren der KR101935557B1 wird ein vorgeschnittenes Folienblatt zur Aufbringung auf die Batteriezelle verwendet, die in auf eine Schmalseite stehenden Lage bearbeitet wird. Die Folie wird mittels langer und kurzer Andrückrollen aufgewalzt, zusätzlich wird ein Eckteilheizteil verwendet.

Die EP4231409A1 offenbart eine Vorrichtung zum Einwickeln einer Batteriezelle in Isolierfolie, bestehend aus einem Schiebemechanismus, einem Positioniermechanismus, einem Kantenfaltmechanismus gegenüberliegend dem Schiebemechanismus, und ausgelegt zum Falten einer Kante einer um die Batteriezelle gewickelten Isolierfolie, sowie einer Antriebseinheit. Der Schiebemechanismus umfasst eine Basis zum Platzieren einer Batteriezelle und eine Schiebebaugruppe. Der Positionierungsmechanismus ist an einer Seite der Basis angeordnet und dient zur Positionierung der Batteriezelle auf der Basis. Die Antriebseinheit dient dazu, den Kantenfaltmechanismus anzutreiben, um die Kante der um die Batteriezelle gewickelten Isolierfolie zu falten, und den Schiebeblock anzutreiben, um die Batterie-zelle auf die Basis zu drücken.

Eine Wickelmaschine von XIAMEN TOB NEW ENERGY TECHNOLOGY CO., LTD. führt Klebefolie von einer Vorratsrolle zu, wobei die Batteriezelle in die Folienbahn eingeschoben und dabei auf drei Seiten abgedeckt wird. Nach Ablängen der Folie werden mittels an der Zelle entlanggeführter Rollen die überstehenden Ränder an den Schmalseiten angepresst.

Aufgabe der vorliegenden Erfindung war es, die Nachteile des Standes der Technik zu überwinden und eine Vorrichtung und ein Verfahren zur Verfügung zu stellen, mittels derer die Klebefolie schonend und sicher auf die Batteriezelle aufgebracht werden kann, und die ein Verfahren mit kurzen Taktzeiten und sicherem, positionsgenauem und schonendem Handling der Batteriezellen ermöglichen.

Diese Aufgabe wird durch eine Vorrichtung und ein Verfahren gemäß den Ansprüchen gelöst.

Die erfindungsgemäße Vorrichtung ist zur Lösung der gestellten Aufgabe gekennzeichnet durch:
a) eine Ablängeinheit für Endlos-Klebefolie mit einer Schneideeinheit und vor-zugsweise einer Greifereinheit mit zumindest einem in Folienlängsrichtung verfahrbaren Greifer für die vordere Stirnseite der Klebefolie,
b) eine Manipulatoreinheit für ein abgetrenntes Klebefolien-Blatt, wobei die Manipulatoreinheit vertikal verfahrbare Haltereinrichtungen für Vorderende und Hinterende an beiden Seiten des Blattes aufweist,
c) eine Transporteinrichtung derart ausgelegt, dass die Aufnahmenester vertikal unterhalb der Ablängeinheit zu liegen kommen,
d) eine Steuereinheit für die Halteeinrichtungen, ausgelegt, um die Haltereinrichtungen für Vorderende und Hinterende in unterschiedliche Höhe verfahren zu können, und
e) eine Klebefolien-Anpresseinheit, die entlang der Transporteinrichtung mitbewegbar ist.

Bevorzugt ist eine Wendeeinheit mit zumindest einem 180° schwenkbaren Aufnahmenest, dessen Schwenkachse vorzugsweise ausserhalb der Abmessungen des Aufnahmenestes liegt.

Dabei ist es besonders vorteilhaft, wenn eine Wendeeinheit mit zwei, einander bezüglich der Schwenkachse diametral gegenüberliegenden Aufnahmenestern verwendet wird.

Gemäss einer weiteren Ausführungsform der Erfindung ist eine Wendeeinheit mit Halteeinrichtungen mit grossflächiger Auflage für die Fixierung der Batteriezelle während der Schwenkbewegung und Halteeinrichtungen mit kleinflächiger Auflage für die Fixierung während des Übergabevorganges vorgesehen.

Eine weitere Ausführungsform einer erfindungsgemässen Anlage ist gekennzeichnet durch eine Übergabeeinrichtung zwischen Transporteinrichtung und Wendeeinheit, mit Greifergabeln unten und zumindest einer grossflächigen Auflage oben, wobei alle Aufnahmenester Ausnehmungen für die Greifergabeln der Übergabeeinrichtung aufweisen.

Eine weitere Ausführungsform einer erfindungsgemässen Anlage ist gekennzeichnet durch eine Greifereinheit mit einer über die Breite der Folie durchgehenden Greifbacke.

Alternativ ist es auch denkbar, die Anlage mit mehreren entlang der Breite der Folie verteilten und vorzugsweise separat ansteuerbaren Greifbacken auszustatten.

Eine weitere Ausführungsform der Erfindung sieht eine Anlage vor, gekennzeichnet durch eine Ablängeinheit mit zumindest einem vertikal verfahrenden Messer, vorzugsweise an der Seite der nicht klebenden Oberfläche der Folie.

Besonders vorteilhaft ist eine weitere Ausführungsform der Erfindung, bei welcher die Aufnahmenester für die Batteriezelle mit quer zur Bewegungsrichtung der Aufnahmenester horizontal verfahrbaren lösbaren Halteeinrichtungen ausgestattet sind.

Zur Lösung der eingangs gestellten Aufgabe ist auch ein Verfahren zum Aufbringen einer Klebefolie auf einer Batteriezelle vorgesehen, vorzugsweise unter Nutzung einer Anlage wie in den obigen Absätzen beschrieben, und erfindungsgemäss gekennzeichnet durch folgenden Schritte:
a) Bereitstellen einer Klebefolie in Form eines Endlosbandes mit grösserer Breite als die Batteriezelle,
b) Ablängen eines Klebefolienblattes mit grösserer Länge als die Batteriezelle und Verbringen einer Batteriezelle vertikal unter das Klebefolienblatt,
c) Aufbringen des Klebefolienblattes auf eine grosse Oberfläche in gegen die Horizontale geneigter Stellung und Aufwalzen von einem Rand ausgehend bei gleich-zeitigem Absenken des Klebefolienblattes,
d) Umschlagen und Aufwalzen des Längsrandes des Klebefolienblattes während oder nach dem Weitertransport der Batteriezelle,
e) Umschlagen und Aufwalzen der Ränder an den Schmalseiten nach dem Weitertransport, und
f) Wenden der Batteriezelle durch Schwenken des Aufnahmenestes für die Batteriezelle um 180° in einer durchgehenden Bewegung

Ein derartiges Verfahren kann bevorzugt durch das Bereitstellen eines leeren Aufnahmenestes in der Wendeeinheit für eine weitere Batteriezelle gleichzeitig mit dem Schwenken der bereits in der Wendeeinheit befindlichen, einseitig beklebten Batteriezelle weitergebildet werden.

Bevorzugt ist das Verfahren weiters gekennzeichnet durch die Fixierung der einseitig beklebten Batteriezelle für den Schwenkvorgang durch Andrücken über einen Grossteil der Länge der Zelle und über zumindest einen Teil der Breite der Zelle.

Eine weitere Variante des erfindungsgemässen Verfahrens ist gekennzeichnet durch Lösen und seitliches Verfahren der Transportfixierungen an den Aufnahmenestern während der Walzvorgänge, horizontal und quer zur Bewegungsrichtung der Aufnahmenester.

Zum besseren Verständnis der Erfindung wird diese anhand der nachfolgenden Figuren näher erläutert.

Es zeigen jeweils in stark vereinfachter, schematischer Darstellung:
- Fig. 1: Eine schematische Darstellung einer Anlage zur Herstellung einer Batteriezelle und einer daran angeschlossenen Anlage zum Aufbringen einer Klebefolie auf einer Batteriezelle sowie einer nach geschalteten Anlage zur Weiterverarbeitung der umwickelten Batteriezelle
- Fig. 2: Eine Ansicht einer Transporteinrichtung für die Batteriezellen mit mehreren Aufnahmenestern mit Halteeinrichtungen für die Batteriezellen, zumindest einer Klebefolien-Bereitstellungseinheit, zumindest einer Klebefolien-Anpresseinheit für eine der grossen Oberflächen, und einer Manipulatoranordnung für ein Klebefolienblatt, alle in einer erfindungsgemässen Ausführung
- Fig. 3: Die Einheiten der Fig. 2 in einem Zustand mit teilweise zur Batteriezelle abgesenktem Klebefolienblatt vor Beginn des Anpressvorganges
- Fig. 4: Die Einheiten der Fig. 2 in einem Zustand mit teilweise angepresstem Klebefolienblatt während des Anpressvorganges
- Fig. 5: Die Einheiten der Fig. 2 in einem Zustand mit weitertransportierter Batteriezelle mit an einer Oberfläche und an einer Stirnseite angepresstem Klebefolienblatt
- Fig. 6: Eine erfindungsgemässe Einheit zum Anpressen des Klebefolienblattes an weiteren Stirnseiten der Batteriezelle zu Beginn des Anpressvorgangs
- Fig. 7: Die Einheit der Fig. 6 in einem späteren Zustand während des Anpressvorgangs
- Fig. 8: Die Einheit der Fig. 6 in einem noch späteren Zustand während des Anpressvorgangs
- Fig. 9: Eine erfindungsgemässe Wendeeinheit mit zwei um jeweils 180° schwenkbaren Aufnahmenestern für die Batteriezellen und einer erfindungsgemässen Übergabeeinheit
- Fig. 10: Die erfindungsgemässe Übergabeeinheit der Fig. 9 in grösserem Massstab
- Fig. 11: Die Einheiten der Fig. 9 in einem Zustand nach Übergabe einer Batteriezelle in eines der Aufnahmenester der Wendeeinheit
- Fig. 12: Die Einheiten der Fig. 9 in einem Zustand während des Schwenkens der Aufnahmenester
- Fig. 13: Die Wendeeinheit der Fig. 9 zusammen mit einer weiteren Übergabeeinheit gegenüberliegend der ersten Übergabeeinheit der Fig. 9
- Fig. 14: Die Einheiten der Fig. 13 in einem Zustand während der Übergabe einer Batteriezelle in eines der Aufnahmenester einer der Wendeeinheit nachgeschalteten Anlage

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

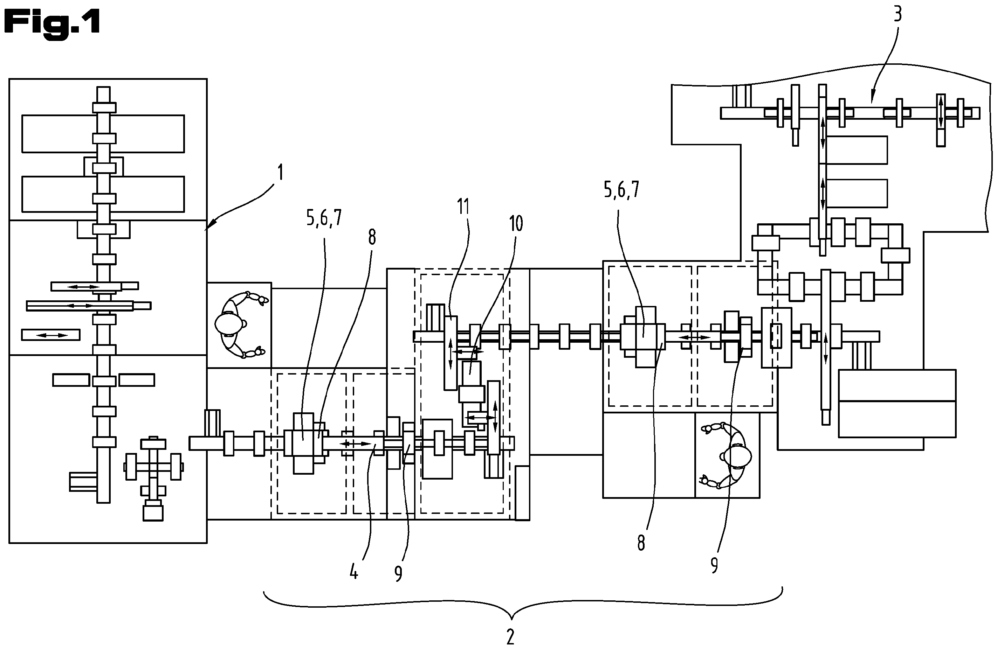

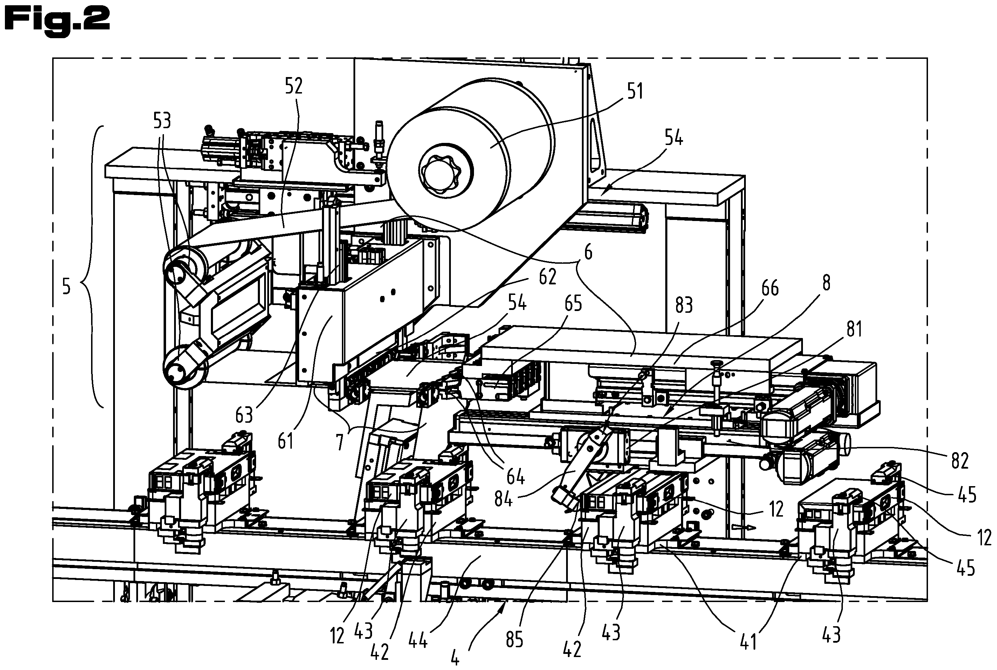

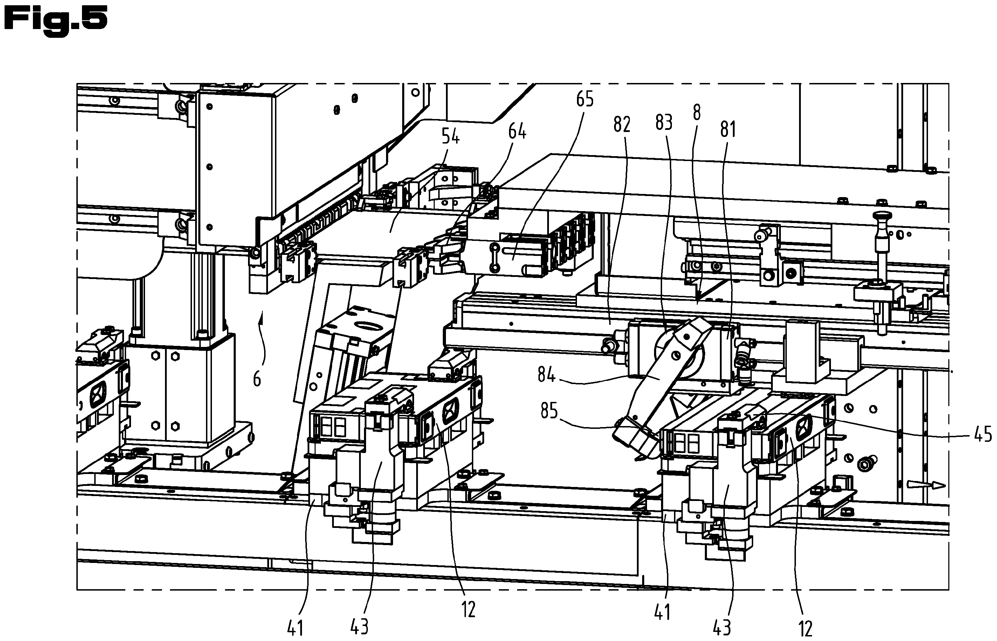

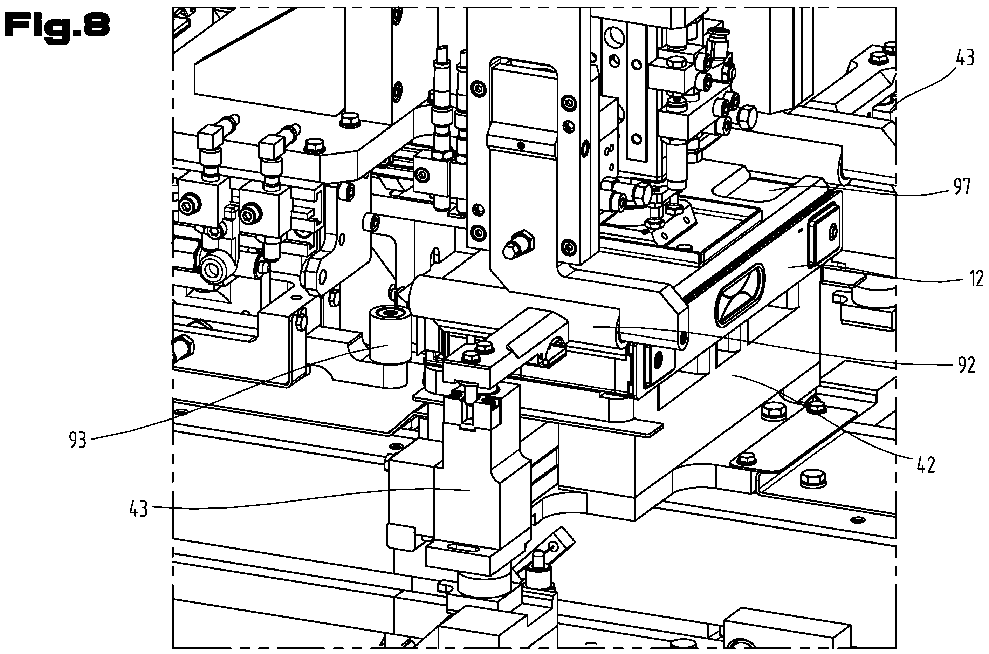

Die Fig. 1 zeigt eine schematische Darstellung einer Anlage 1 zur Herstellung einer Batteriezelle 12 und einer daran angeschlossenen Anlage 2 zum Aufbringen einer Klebefolie auf einer Batteriezelle 12 sowie einer nach geschalteten Anlage 3 zur Weiterverarbeitung der umwickelten Batteriezelle 12. Die Anlage 2 zum Aufbringen einer Klebefolie auf einer Batteriezelle wiederum umfasst zwei Transporteinrichtungen 4 für die Batteriezellen 12, zwei Klebefolien-Bereitstellungseinheiten 5, zwei Klebefolien-Anpresseinheiten 8 für eine der grossen Oberflächen, zwei Klebefolien-Anpresseinheiten 9 für die Schmalseiten, und eine Batteriezellen-Wendeeinheit 10. Zwischen den Transporteinrichtungen 4 und der Batteriezellen-Wendeinheit 10 sind Übergabeeinheiten 11 angeordnet. Der erfindungsgemässe Aufbau gemäss einem bevorzugten Ausführungsbeispiel dieser oben genannten Anlagenteile und Einheiten werden zusammen mit einer bevorzugten Variante eines erfindungsgemässen Verfahrens zum Aufbringen einer Klebefolie auf einer Batteriezelle 12 werden nachfolgend unter Bezugnahme auf die Fig. 2 bis Fig. 14 erläutert.

Fig. 2 zeigt in Seitenansicht eine Transporteinrichtung 4 für die Batteriezellen 12 mit mehreren Aufnahmenestern 41, vorzugsweise mit Auflageplatten 42 für die Batteriezellen 12, und mit Halteeinrichtungen 43 für die Batteriezellen 12. Die Aufnahmenester 41 sind auf einer Schiene 44 geführt und durch ein nicht dargestelltes Antriebsmittel über das Automatisierungssystem der Anlage automatisch entlang der Schiene 44 verfahrbar. Die Halteeinrichtungen 43 sind mit Halteklammern 45 ausgestattet, die die Batteriezellen 12 temporär vertikal mit einer Haltekraft beaufschlagen und die automatisch auch wieder von der Batteriezelle 12 abgehoben und automatisch gesteuert vorzugsweise auch quer zur Schiene 44 und parallel zur Oberfläche des Aufnahmenestes 41 und/oder der Auflageplatte 42 verfahren werden können, um Platz für Bearbeitungseinheiten und/oder das Manipulieren der Batteriezellen 12 zu schaffen.

Eine Klebefolien-Bereitstellungseinheit 5 ist vorzugsweise vertikal oberhalb der Transporteinrichtung 4, zumindest einem Abschnitt dieser Transporteinrichtung 4, angeordnet. Die Klebefolien-Bereitstellungseinheit 5 umfasst zumindest eine Vorratsrolle 51 für Klebefolie in Endlosform. Die Klebefolie 52 wird vorzugsweise über eine Umlenkrollenanordnung 53 geführt und in einer Ebene parallel zur Oberfläche der Aufnahmenester 41 bzw. der Auflageplatten 42 einer Ablängeinheit 6 zugeführt. Zumindest eine der Rollen der Umlenkrollenanordnung 53 ist über das Automatisierungssystem der Anlage automatisch mittels einer steuerbaren Antriebseinheit 54 parallel zur Oberfläche der Aufnahmenester 41 bzw. der Auflageplatten 42 und parallel zur Transportrichtung der Batteriezellen 12 bewegbar, um die Klebefolie 52 gespannt zu halten und gleichzeitig während der Verarbeitung in der Ablängeinheit 6 schonend nachführen zu können.

Die Ablängeinheit 6 umfasst eine Schneideeinheit 61 mit zumindest einem Messer 62, wobei die Schneideeinheit 61 vorzugsweise in einem vorzugsweise schwenkbaren Rahmen als Träger 63 gehalten ist. Dieser Rahmen kann vorzugsweise um eine Achse geschwenkt werden, die parallel zur Oberfläche der Aufnahmenester 42 orientiert ist, um von oben her auf die Klebefolie 52 abgesenkt zu werden und diese im Zuge des Absenkens zu durchschneiden, so dass ein Klebefolienblatt 54 vom Endlosband der Klebefolie 52 abgetrennt wird. Alternativ wäre auch ein fixer Rahmen als Träger für die Schneideeinheit 61 denkbar, die dann ein in vertikaler Richtung vorzugsweise von oben her absenkbares Messer 62 umfassen könnte. Jedenfalls ist es bevorzugt, die Folie 52 von der nicht klebenden Seite her zu durchtrennen. Auch andere Schneidwerkzeuge wären denkbar, beispielswiese Schneidrollen, schräge Messer, Scherenanordnungen, od.dgl.

Die Ablängeinheit 6 umfasst weiters eine Greifereinheit 64 bis 66, welche das vordere Ende des endlosen Klebefolienbandes 52 fasst und durch die Schneideeinheit 61 hindurchzieht, bis die gewünschte Länge eine Klebefolienblattes 54 erreicht ist. Dazu ist die Greifereinheit 64 bis 66 mit zumindest einem in Folienlängsrichtung verfahrbaren Greifer 64 versehen, dessen Betätigung über das Automatisierungssystem der Anlage automatisch gesteuert über Antriebseinheiten 65 erfolgt. Diese Antriebseinheiten 65 sind selbst wieder mittels eines steuerbaren Antriebs 66 in Folienlängsrichtung bzw. in Transportrichtung des jeweils unterhalb der Ablängeinheit 6 befindlichen Aufnahmenestes 42 verfahrbar, um nach Ergreifen des vorderen Folienrandes die Folie durch die Ablängeinheit 6 zu transportieren. Während dieses Hindurchziehens der Folie 52 fährt auch die Umlenkrollenanordnung 53 simultan mit, um zu grosse Spannung in der Folie 52 und ein Einreissen der Folie 52 zu vermeiden. Bei Vorhandensein mehrerer Greifer 64 werden vorzugsweise je nach Folienbreite nur die benötigen Greifer 64 angesteuert und die ausserhalb der Breite der Folie 52 befindlichen Greifer 64 bleiben inaktiv. Es ist aber auch denkbar, nur einen über die gesamte Breite der Folie 52 reichenden Greifer 64 zu verwenden, der allenfalls je nach Folienbreite abgestimmt austauschbar ist.

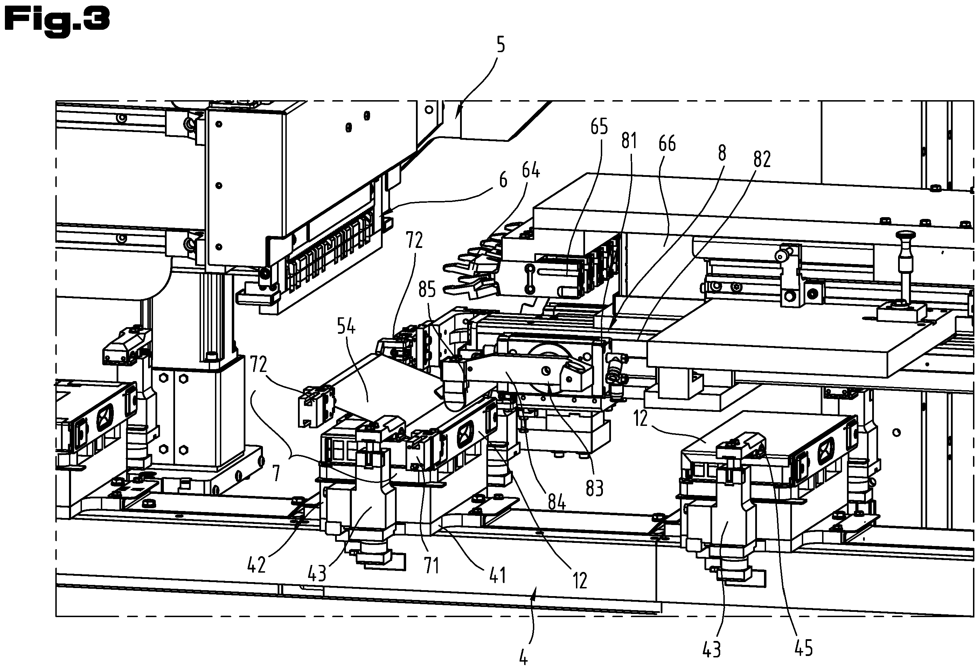

Die Handhabung der abgetrennten Klebefolienblätter 54, die unmittelbar nach dem Abtrennen in der Ablängeinheit 6 vorerst noch parallel zur Oberfläche der auf den Aufnahmenestern 42 befindlichen Batteriezellen 12 vorliegen, wird durch eine Manipulatoranordnung 7 bewerkstelligt, die nachfolgend unter Bezugnahme auf Fig. 3 näher erläutert wird.

Diese Manipulatoranordnung 7 umfasst vorzugsweise zwei vertikal verfahrbare Haltereinrichtungen 71 für Vorderende und vorzugsweise ebenso zwei vertikal verfahrbare Halteeinrichtungen 72 für das Hinterende des abgelängten Klebefolienblattes 54. Vorzugsweise befinden sich die Halteeinrichtungen 71, 72 an den gegenüberliegenden Seiten des Klebefolienblattes 54, das somit an seinen vier Ecken zwischen den Halteeinrichtungen 71, 72 aufgespannt ist. Die Halteeinrichtungen 71, 72 sind über eine spezielle Steuereinheit (nicht dargestellt), die ein Teil bzw. ein Modul des Automatisierungssystems der Anlage sein kann, unabhängig voneinander ansteuerbar und verfahrbar, wobei zumindest die zusammengehörigen vorderen Halteeinrichtungen 71 unabhängig von den beiden zusammengehörigen hinteren Halteeinrichtungen 72 verfahrbar sind. Dies erlaubt bei entsprechender Ansteuerung die Ausrichtung des Klebefolienblattes 54 wie in Fig. 3 dargestellt, nämlich auf ein Ende der Batteriezelle 12, hier vorzugsweise das in Transportrichtung gesehen vordere Ende, abfallend hin geneigt, vorzugsweise in einem spitzen Winkel gegen die Oberfläche der Batteriezelle 12.

Wenn die vorderen Halteeinrichtungen 71 vollständig abgesenkt sind, liegt der vordere Rand des Klebefolienblattes 54 auf dem vorderen Rand der Batteriezelle 12 auf, wobei der genaue Berührungsstreifen durch die Steuerung des Aufnahmenestes 42 einstellbar ist. Sobald diese Stellung erreicht ist, kann die erste Klebefolien-Anpresseinheit 8 für die obenliegende grosse Oberfläche der Batteriezelle 12 aktiviert werden, um das Klebefolienblatt 54 aufzubringen.

Die Klebefolien-Anpresseinheit 8 umfasst einen Träger 81, der mittels eines ansteuerbaren

Antriebs 82 über das Automatisierungssystem der Anlage gesteuert in Längsrichtung des Klebefolienblattes 54 und der Batteriezelle 12 verfahrbar ist. Auf diesem Träger 81 ist ein mittels eines steuerbar angetriebenen Zahnstangen-Zahnrad-Mechanismus 83 verschwenkbarer Rahmen 84 angebracht, in welchem eine Anpressrolle 85 um eine quer zur Längsrichtung des Klebefolienblattes 54 und der Batteriezelle 12 liegende Achse frei drehbar gehalten ist. Eine andere mögliche Ausführungsform ist eine Lagerung des Rahmens 84 auf dem Träger 81 auf einer Schwenkachse, die mittels eines Getriebes, Drehantriebs od. dgl. verschwenkbar ist. Die Anpressrolle 85 kann über beispielsweise den Mechanismus 83 an die Oberfläche der Batteriezelle 12 angedrückt werden, um dabei auch das Klebefolienblatt 54 auf diese Oberfläche anzudrücken, wobei die Oberfläche der Anpressrolle 85 vorzugsweise elastisch nachgiebig ausgeführt ist, um geringfügige Unebenheiten an der Oberfläche der Batteriezelle 12 ausgleichen zu können.

Der Träger 81 und damit auch die Anpressrolle 85 kann über das Automatisierungssystem der Anlage automatisch mittels des Antriebs 82 entlang der Oberfläche der Batteriezelle 12 in deren Längsrichtung entlanggeführt werden, kann aber auch mit der Bewegung der Batteriezelle 12 und des Aufnahmenestes 42 mitgeführt werden, bzw. kann eine kombinierte Bewegung durch Überlagerung der beiden genannten Bewegungsmöglichkeiten bewirkt werden. Bevorzugt wird der Träger 81 mit einer geringeren Geschwindigkeit in Richtung der Bewegung der Aufnahmenester 42 mitgeführt als jener der Aufnahmenestern 42 selbst. Damit wird eine Bewegung der Anpressrolle 85 über die Oberfläche der Batteriezelle 12 mit einer Geschwindigkeit bewirkt, die geringer ist als Transportgeschwindigkeit der Aufnahmenester 42.

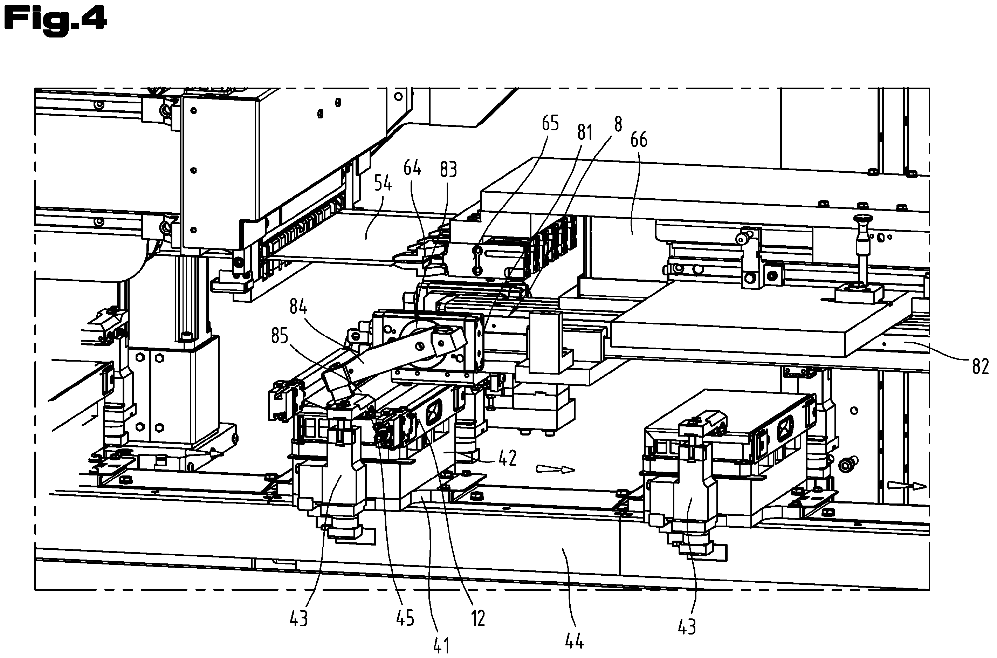

Während des Entlangführens der Anpressrolle 85 über die Oberfläche der Batteriezelle 12, wovon eine Momentaufnahme in Fig. 4 dargestellt ist, sind die Halteklammern 45 von der Batteriezelle 12 abgehoben und sind auch die Halteeinrichtungen 43 seitlich von der Batteriezelle 12 weg verfahren, um die Bewegung der Anpressrolle 85 über die Batteriezelle 12 nicht zu behindern. Durch das Andrücken der Batteriezelle 12 durch die Anpressrolle 85 und die damit einhergehende Reibungserhöhung ist eine ausreichende Fixierung der Batteriezelle 12 auf dem Aufnahmenest 42 gewährleistet.

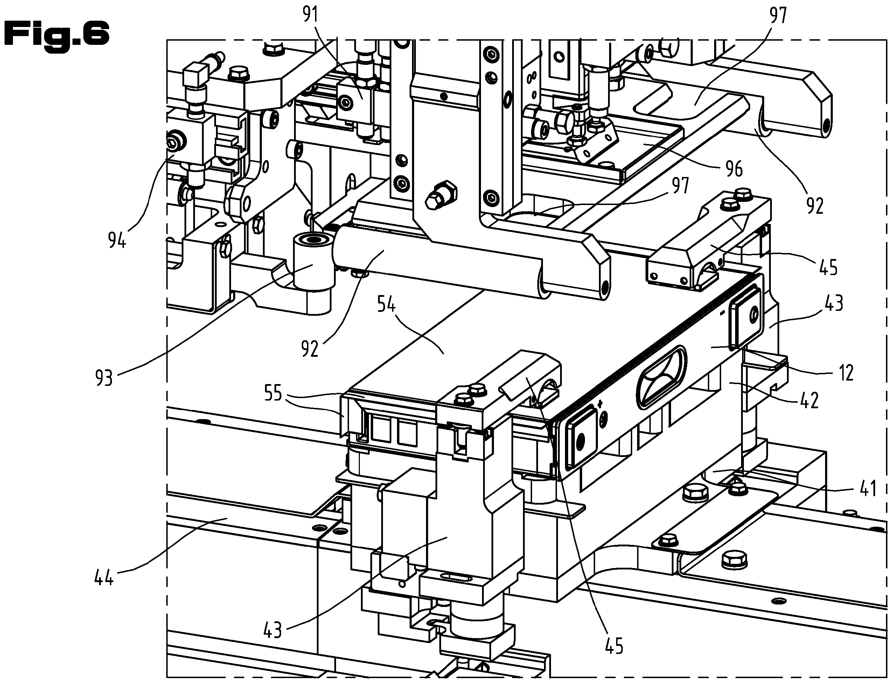

Nach Verlassen des Bereiches der ersten Klebefolien-Anpresseinheit 8 wird die an einer ersten grossen Oberfläche mit der Klebefolie versehene Batteriezelle 12 entlang der Schiene 44 weitertransportiert und gelangt zu einer zweiten Klebefolien-Anpresseinheit 9, die in vergrössertem Massstab in Fig. 6 abgebildet ist.

Auf einem Träger 91 sind auf beiden Seiten der Batteriezelle 12 seitliche Anpressrollen 92 angeordnet, deren Achsen parallel zur Längsrichtung der Batteriezelle 12 liegen und deren Länge etwa der Länge der seitlichen Stirnfläche der Batteriezelle 12 entspricht. Weiters sind hintere Anpressrollen 93 am Träger 91 angebracht, deren Achsen vertikal bzw. orthogonal zu den Achsen der seitlichen Anpressrollen 92 orientiert sind, wobei die Länge der Anpressrollen 93 etwa der Höhe der seitlichen Stirnflächen der Batteriezelle 12 entspricht. Mittels einer Antriebsanordnung 94 kann der Träger 91 insgesamt zumindest vertikal auf das Aufnahmenest 41 bzw. die darauf befindliche Batteriezelle 12 abgesenkt werden. Die Antriebsanordnung 94 erlaubt aber auch eine ebenfalls automatisch gesteuerte Bewegung der Anpressrollen 92, 93 relativ zum Träger. So können die Anpressrollen 92 in vertikaler Richtung entlang den seitlichen Stirnflächen der Batteriezelle 12 geführt und an diese Stirnflächen angepresst werden, um einen Überstand des Klebefolienblattes 54 seitlich an die Batteriezelle 12 anzudrücken. Die Anpressrollen 93 können über die Antriebsanordnung 94 in Längsrichtung entlang den seitlichen Stirnflächen der Batteriezelle 12 geführt und an diese angepresst werden, um den Überstand 55 auch von hinten her an die seitliche Stirnfläche anzudrücken und damit das Klebefolienblatt 54 komplett mit der Oberfläche der Batteriezelle 12 zu verbinden.

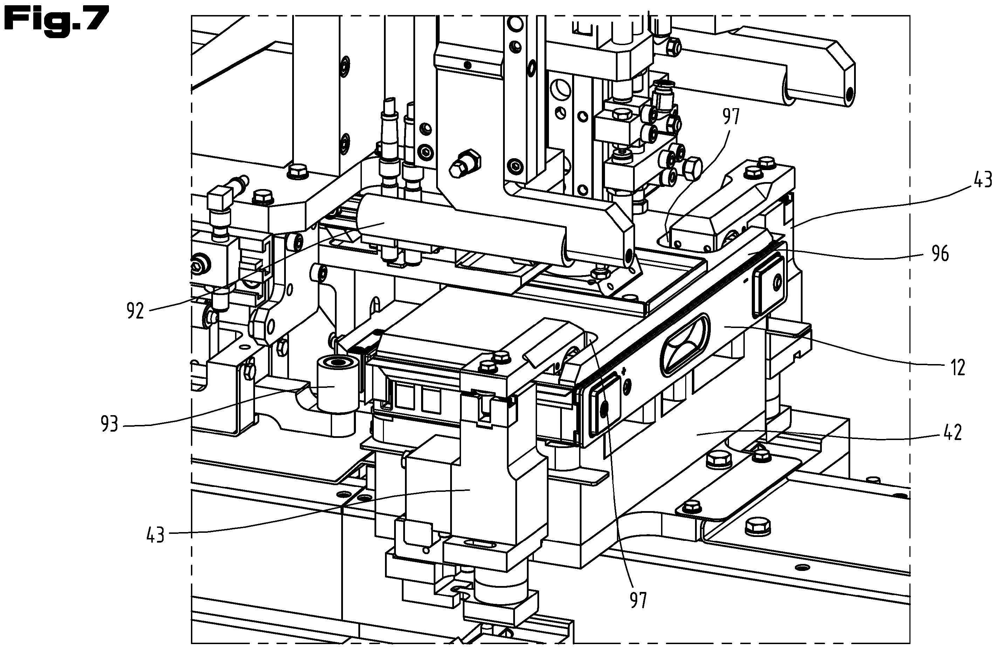

Während des Entlangführens zumindest der Anpressrollen 92 über die seitlichen Oberflächen der Batteriezelle 12 sind die Halteklammern 45 erneut von der Batteriezelle 12 abgehoben und sind auch die Halteeinrichtungen 43 seitlich von der Batteriezelle 12 weg verfahren, wie in Fig. 7 gezeigt ist, um die Bewegung der Anpressrollen 92 nicht zu behindern. Um dabei, und insbesondere nicht beim Anpressen der hinteren Anpressrollen 93 und deren Bewegung in Längsrichtung der Batteriezelle 12 und des Aufnahmenestes 41, eine Verschiebung der Batteriezelle 12 auf dem Aufnahmenest 41 hervorzurufen, ist am Träger 91 vorzugsweise eine vertikal auf die Batteriezelle 12 hin absenkbare Andruckplatte 96 angebracht, mittels derer die Batteriezelle 12 auf dem Aufnahmenest 41 fixiert werden kann, sobald die Halteklammern 45 gelöst und die Halteeinrichtungen 43 seitlich vom Aufnahmenest 41 weg verfahren worden sind. Die Andruckplatte 96 weist dabei im Bereich der Halteklammern 45 Ausnehmungen 97 auf, um über das Automatisierungssystem der Anlage gesteuert das Absenken der Andruckplatte 96 bei noch anliegenden Halteklammern 45 zu gestatten und damit die Fixierung der Batteriezelle 12 zu keinem Zeitpunkt aufzugeben.

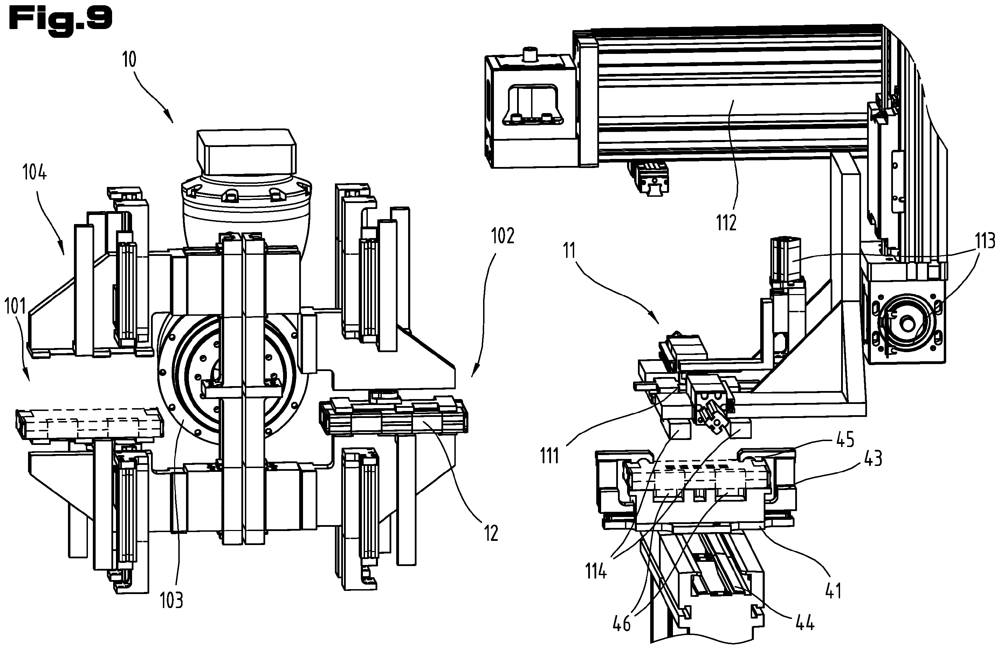

Die nach der zweiten Klebefolien-Anpresseinheit 9 nun auf einer ihrer grossen Oberflächen und zumindest teilweise auch an drei schmalen Stirnseiten mit dem Klebefolienblatt 54 bedeckten Batteriezelle 12 wird anschliessend an eine Batteriezellen-Wendeeinheit 10 übergeben. Diese Wendeeinheit 10 und die Übergabeeinheit 11 zur Übernahme der Batteriezelle 12 von der Transportvorrichtung 4 sind in Fig. 9 übersichtsmässig dargestellt.

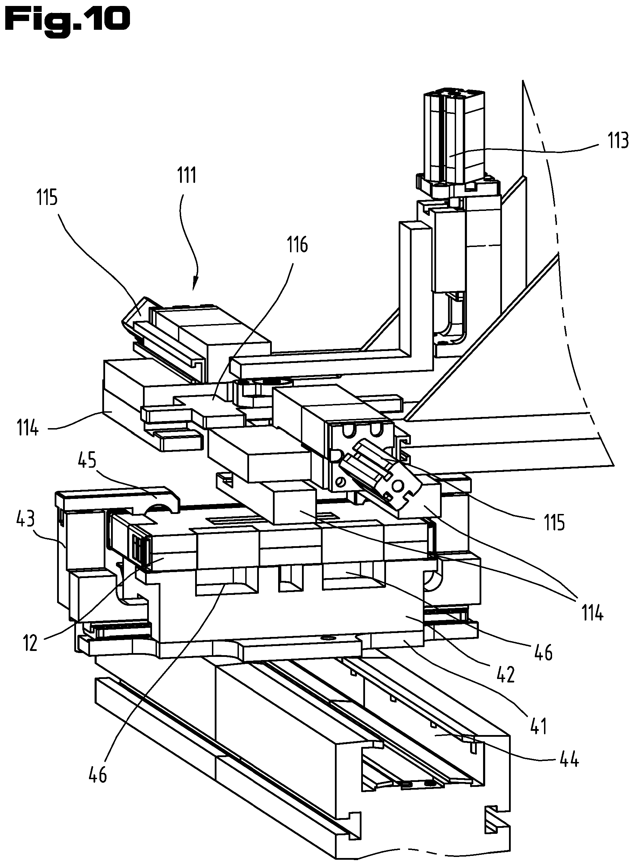

Eine Greiferanordnung 111 der Übergabeeinheit 11 ist über das Automatisierungssystem der Anlage automatisch gegenüber einem Tragrahmen 112 mittels Antrieben 113 relativ zum Aufnahmenest 41 und der Wendeeinheit 10 verfahrbar. Die Greiferanordnung 111 weist vorzugsweise als untere, die Batteriezelle 12 von unten her haltende und unterstützende Elemente Greifergabeln 114 auf. Diese vorzugsweise vier Greifergabeln 114 sind zu beiden Seiten der Batteriezelle 12 paarweise angeordnet. Um das Einführen der Greifergabeln 114 in den Bereich unterhalb der auf dem Aufnahmenest 41 noch fixierten Batteriezelle 12 zu ermöglichen, weist das Aufnahmenest 41 bzw. vorzugsweise die Auflageplatte 42 entsprechende Ausnehmungen 46 auf, wie in Fig. 10 noch deutlicher zu sehen ist.

Fig. 10 zeigt auch die vorzugsweise über das Automatisierungssystem der Anlage steuerbaren Antriebseinheiten 115 für die Bewegung der Greifergabeln 114 relativ zur Batteriezelle 12, sowie weiters eine grossflächige Andrückplatte 116, die ebenfalls über das Automatisierungssystem der Anlage automatisch gesteuert vertikal auf die Batteriezelle angedrückt werden kann, um diese zwischen den einander angenäherten Greifergabeln 114 und der Andrückplatte 116 sicher zu fixieren. Die Andrückplatte 116 kann Ausnehmungen aufweisen, um das Absenken auf die Oberflächen der Batteriezelle 12 bei noch anliegenden Halteklammern 45 zu gestatten.

Wie in der Übersicht der Fig. 9 zu sehen ist, weist die Wendeeinheit 10 typischerweise zwei Aufnahmenester 101, 102 für Batteriezellen 12 auf, die einander bezüglich einer Drehachse diametral gegenüberliegen, wobei diese Drehachse durch den Drehantrieb 103 vorgegeben ist. Die Aufnahmenester 101, 102 sind in einem mit dem Drehantrieb 103 gekoppelten, vorzugsweise direkt auf dessen angetriebener und vorzugsweise über das Automatisierungssystem der Anlage gesteuerten Abtriebswelle montierten Rahmen 104 angeordnet und damit jedes um zumindest 180° schwenkbar um diese ausserhalb der Abmessungen der Aufnahmenester 101, 102 liegenden Achse positioniert.

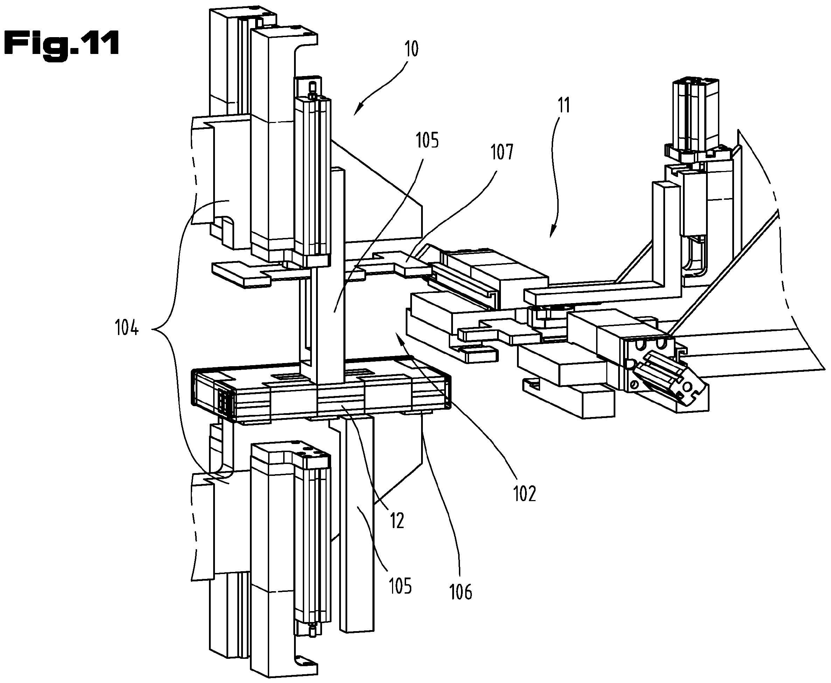

Fig. 11 zeigt eines der Aufnahmenester 102 in vergrösserter Darstellung, mit einer darin durch die Übergabeeinheit 11 abgelegten Batteriezelle 12. Die Batteriezelle 12 liegt auf einer unteren, grossflächigen Auflageplatte 106 auf, wobei kleinflächig auf beide grossen Oberflächen der Batteriezelle 12 einwirkende Fixiereinheiten 105 zur provisorischen Fixierung vorgesehen sind. Dies Fixiereinheiten 105 wirken auf die Batteriezelle 12 schon ein, wenn diese im Aufnahmenest 102 noch durch die Greiferanordnung 111 gehalten ist. Auf der gegenüberliegenden Seite der Auflageplatte 106 ist eine automatisch gesteuert absenkbare grossflächige Andrückplatte 107 angeordnet, um die Batteriezelle 12 während des Wendevorganges zwischen Auflageplatte 106 und Andrückplatte 107 sicher und gegen Verrutschen gesichert zu fixieren. Die Steuerung der Wendeeinheit 10, vorzugsweise ein Teil des Automatisierungssystems der Anlage, ist derart ausgelegt, dass die Fixiereinheiten 105 gelöst und von der Batteriezelle 12 weggefahren werden, sobald die Batteriezelle 12 sicher zwischen Auflageplatte 106 und Andrückplatte geklemmt ist. Auflageplatte 106 und Andrückplatte 107 weisen eine Ausdehnung auf, die allseitig innerhalb des Bereichs von Greifergabeln 114, Andrückplatte 116 sowie Fixiereinheiten 105 liegt oder weisen ebenfalls Ausnehmungen auf, um nicht in die Wirkungsbereiche dieser Elemente einzugreifen. 12. Mittels dieser Fixierung der einseitig beklebten Batteriezelle 12 durch die Auflageplatte 106 und die Andrückplatte 107 für den Schwenkvorgang durch Andrücken über einen Grossteil der Länge der Zelle und über zumindest einen Teil der Breite der Zelle wird selbst bei schnellen Schwenkvorgängen und kurzen Taktzeiten eine ausgezeichnete Haltewirkung gewährleistet.

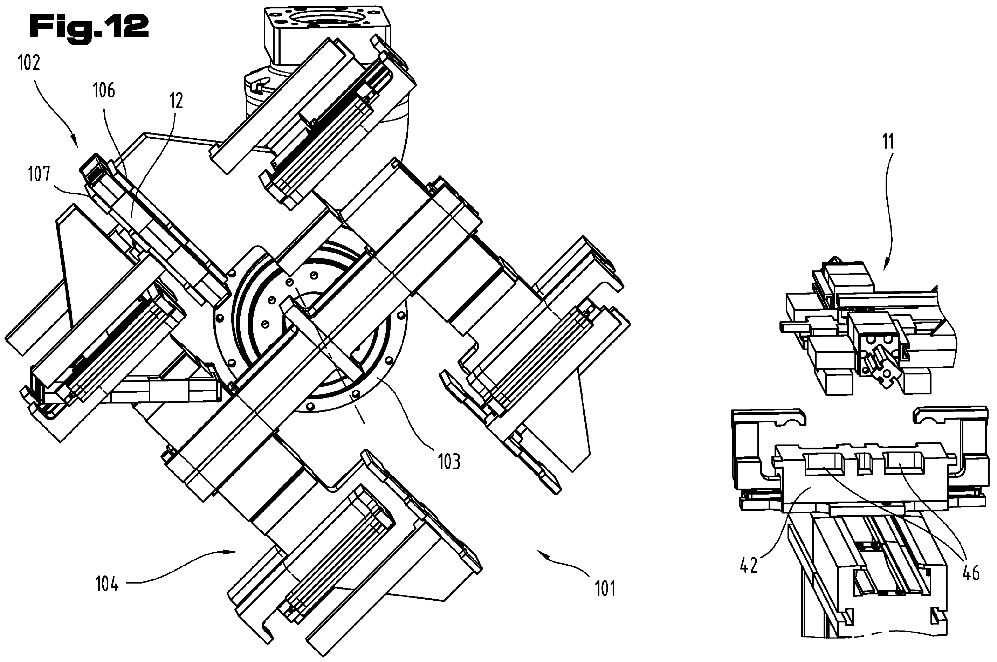

Nach dem Wenden der Batteriezelle 12 um 180° tauschen die Auflageplatte 106 und die Andrückplatte 107 die Funktion. So zeigt die Fig. 12 eine Zwischenstellung während des Verschwenkens des Rahmens 104 und der Aufnahmenester 101, 102, in welcher Zwischenstellung die Batteriezelle 12 bereits an der vormaligen Andrückplatte 107 aufliegt und diese daher neu zur Auflageplatte geworden ist. Die vormalige Auflageplatte 106 wirkt nun bereits mehr von oben her auf die Batteriezelle 12 im Aufnahmenest 102 ein und hat daher die Funktion einer Andrückplatte übernommen.

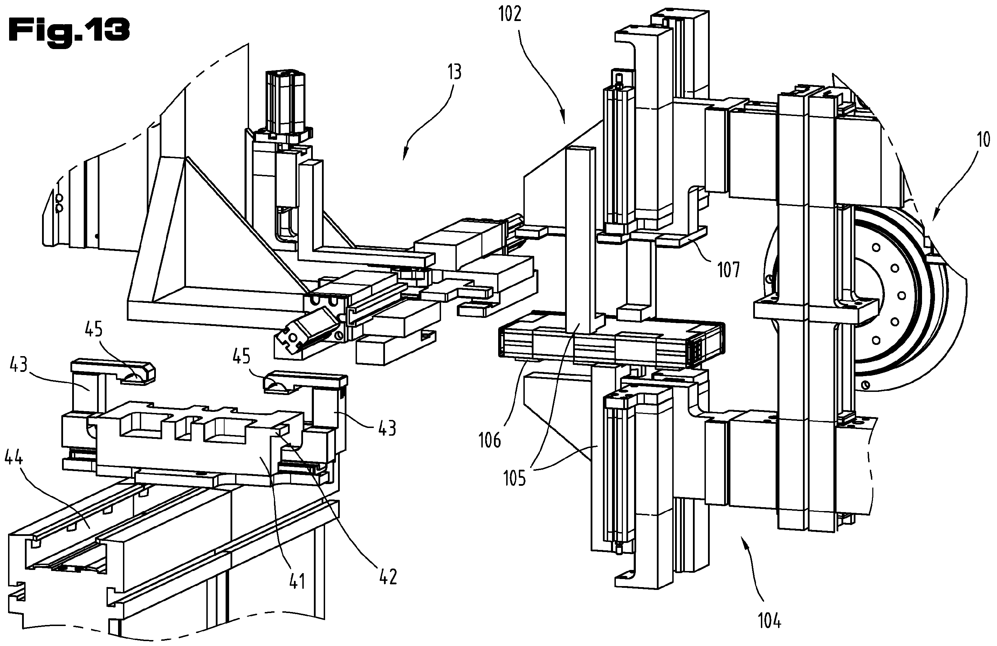

Fig. 13 zeigt die der Fig. 11 gegenüberliegende Seite der Wendeeinheit 10, auf welche das zuerst in Fig. 11 rechts befindliche Aufnahmenest 102 durch die Drehung mittels des Drehantriebs 103 gelangt ist. Die Andrückplatte 107 ist bereits von der Batteriezelle 12 abgehoben, welche nun wieder nur von den Fixiereinheiten 105 auf der Auflageplatte 106 gehalten ist. Eine weitere Greiferanordnung 113, die gleich aufgebaut ist wie die unter Verweis auf die Fig. 9 und Fig. 10 erläuterte erste Greiferanordnung 111, ist bereits an das Aufnahmenest 102 herangefahren, um die Batteriezelle 12 aufzunehmen, die nun mit der mit der Klebefolie 54 versehenen Oberfläche nach unten weisend angeordnet ist.

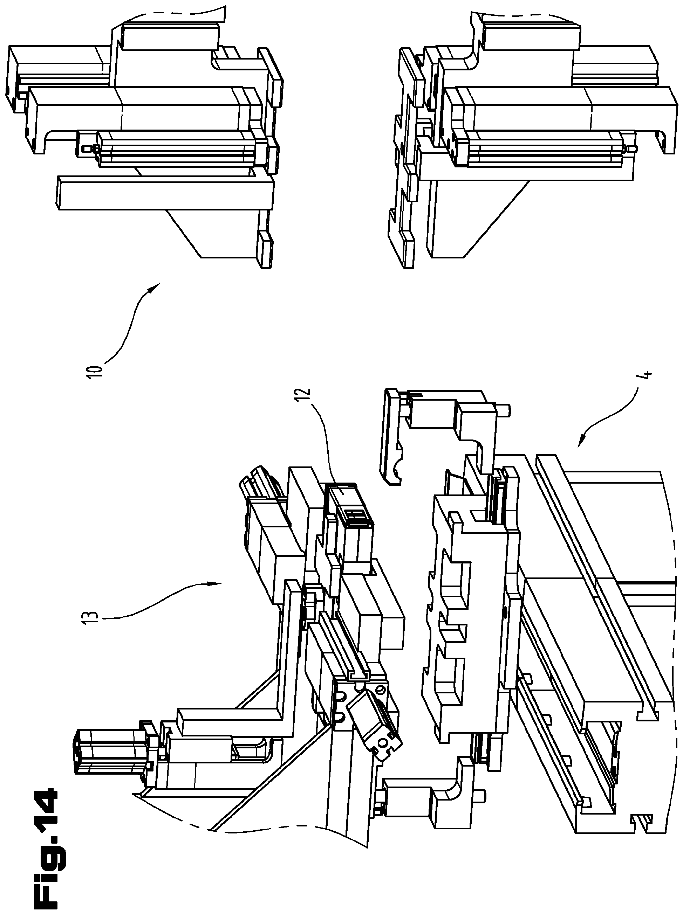

Die zweite Übergabeeinheit 13 Greiferanordnung 113 übergibt schliesslich, wie in Fig. 14 durch eine Darstellung eines weiteren Zwischenzustandes angedeutet ist, die gewendete und mit der noch nicht abgedeckten Oberfläche nun nach oben weisend ausgerichtete Batteriezelle 12 an eine weitere Transporteinrichtung 4. Diese führt die Batteriezelle 12 einem Anlagenabschnitt zu, der in gleicher Weise angeordnet und aufgebaut ist, wie unter Bezugnahme auf Fig. 2 bis Fig. 8 erläutert ist, um nun auch die zweite grosse Oberfläche der Batteriezelle 12 und die angrenzenden schmalen Stirnseiten mit einem weiteren Klebefolienblatt 54 abzudecken. Nach Durchlauf dieses weiteren Anlagenabschnittes kann schliesslich die bis auf die Stirnseite mit den elektrischen Anschlüssen mit Klebefolie abgedeckte Batteriezelle 3 in einer oder mehreren weiteren Anlagen oder Anlagenabschnitten 3 weiterbearbeitet werden.

Soweit es noch nicht aus der obigen Beschreibung der Anlagenabschnitte und deren Funktionsweise hervorgegangen ist, sollen nachfolgend nochmals die wesentlichen Verfahrensabläufe zum Aufbringen einer Klebefolie 54 auf einer Batteriezelle 12 erläutert werden.

Ausgangspunkt ist das Bereitstellen eines Klebefolienblattes 54 mit grösseren Abmessungen als einer der Oberflächen der Batteriezelle 12, sowohl bezüglich der Breite als auch der Länge, so dass nach dessen Aufpressen auf eine der grossen Oberflächen der Batteriezelle 12 noch ein diese Oberfläche überragender Überstand 55 der Klebefolie verbleibt. Dieser Überstand wird auf die Stirnseiten der Batteriezelle 12 hin umgeschlagen und ebenfalls aufgepresst, um das Klebefolienblatt 54 vollständig durch Verklebung mit der Batteriezelle 12 zu verbinden. Wie bereits erwähnt wird die Klebefolie 52 dazu in Form eines Endlosbandes mit grösserer Breite als die Batteriezelle 12 bereitgestellt und erst bei Bedarf zum Aufbringen auf eine Batteriezelle 12 zu einem diskreten Klebefolienblatt 54 abgelängt, vorzugsweise geschnitten.

Um anschliessend auch auf der zweiten, gegenüberliegenden grossen Oberfläche der Batteriezelle 12 in gleicher Weise ein weiteres Klebefolienblatt 54 aufzubringen, wird die Batteriezelle 12 in einer durchgehenden Bewegung um eine ausserhalb der Batteriezelle 12 liegende Achse um einen Winkel von 180° geschwenkt, wodurch die zuerst noch unbedeckte Oberfläche vertikal gesehen oben zu liegen kommt und in weiterer Folge in gleicher Weise wie die gegenüberliegende grosse Oberfläche mit einem weiteren Klebefolienblatt 54 versehen wird. Bevorzugt wird gleichzeitig mit dem Verschwenken der ersten Batteriezelle 12 ein Platz freigemacht, insbesondere ein Aufnahmenest, in welchem gleich die nächste Batteriezelle 12 abgelegt werden kann. Dies wiederholt sich mit jedem Schwenkvorgang, zu dessen Abschluss eine der Batteriezellen 12 mit der noch unbeklebten Oberfläche nach oben gerichtet vorliegt, wobei gleichzeitig eine weitere Batteriezelle 12 zum Verschwenken aufgenommen werden kann. Dieser sich stetig wiederholende Ablauf von Schwenken und neuem Aufnehmen einer nächsten Batteriezelle 12 ermöglicht es die Taktzeiten weiter zu verkürzen.

Nach dem Ablängen des Klebefolienblattes 54 wird dieses vertikal und in einer Richtung senkrecht auf die grosse Oberfläche der Batteriezelle 12 abgesenkt und vorzugsweise am vorderen Rand am vorzugsweise vorderen Ende der Batteriezelle 12 angesetzt. Dazu wird zuerst das Aufnahmenest 41 mit der Batteriezelle 12 vertikal unterhalb des abgelängten Klebefolienblattes 54 positioniert. Bereits während des Absenkens des Klebefolienblattes 54 und auch während des Aufwalzens des Klebefolienblattes 54 auf die obenliegende grosse Oberfläche der Batteriezelle 12 wird der noch nicht mit der Batteriezelle 12 in Kontakt stehende Abschnitt des Klebefolienblattes 54 gegenüber der Ebene der Oberfläche in einem spitzen Winkel geneigt gehalten. Damit wird ein Effekt wie bei einem Aufstreichen der Folie auf die Oberfläche erreicht, wodurch Lufteinschlüsse oder Falten in der Klebefolie weitestgehend vermieden werden können. Selbstverständlich wird während des Aufwalzens des Klebefolienblattes 54 dieses nach und nach abgesenkt, so dass die Anpressrolle 85 immer auf einem im Wesentlichen eben auf der Oberfläche der Batteriezelle 12 aufliegenden Streifen des Klebefolienblattes 54 abrollt und die in Rollrichtung nachfolgende Klebefolie selbst auch auf die Oberfläche andrückt.

Um kurze Taktzeiten zu ermöglichen, erfolgt das Umschlagen und Aufwalzen des Längsrandes des Klebefolienblattes 54 am hinteren Ende der Batteriezelle 12 vorzugsweise während oder nach dem Weitertransport der Batteriezelle 12 auf der Transporteinrichtung, was durch die bewegliche und simultan mit dem Aufnahmenest 41 der Batteriezelle 12 verfahrbare Tragestruktur der Anpressrolle 85 möglich ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

### Bezugszeichenaufstellung

- 1: Gesamtanlage
- 2: Anlage zum Aufbringen der Klebefolie
- 3: Anlage 3 zur Weiterverarbeitung
- 4: Transporteinrichtung
- 5: Klebefolien-Bereitstellungseinheit
- 6: Ablängeinheit
- 7: Manipulatoreinheit
- 8: Klebefolien-Anpresseinheit
- 9: Klebefolien-Anpresseinheit
- 10: Wendeeinheit
- 11: Erste Übergabeeinheit
- 12: Batteriezelle
- 13: Zweite Übergabeeinheit

- 41: Aufnahmenest
- 42: Auflageplatte
- 43: Halteeinrichtung
- 44: Schiene
- 45: Halteklammer
- 46: Ausnehmung

- 51: Klebefolienrolle
- 52: Klebefolie
- 53: Umlenkrollenanordnung
- 54: Antriebseinheit
- 55: Überstand

- 61: Schneideeinheit
- 62: Messer
- 63: Träger für Schneideeinheit
- 64: Greifer
- 65: Antriebseinheiten für Greifer
- 66: Antrieb

- 71: vordere Halteeinrichtung
- 72: hintere Halteeinrichtung

- 81: Träger
- 82: Antrieb
- 83: Zahnstangen-Zahnrad-Mechanismus
- 84: Rahmen
- 85: Anpressrolle

- 91: Träger
- 92: Anpressrolle
- 93: Anpressrolle
- 94: Antriebsanordnung
- 96: Andrückplatte
- 97: Ausnehmung

- 101: Aufnahmenest
- 102: Aufnahmenest
- 103: Drehantrieb
- 104: Rahmen
- 105: erste Fixieranordnung
- 106: Andrück-/Auflageplatte
- 107: Andrück-/Auflageplatte

- 111: Antrieb
- 112: Tragrahmen
- 113: Greiferanordnung
- 114: Greifergabel
- 115: Antriebseinheit
- 116: Andrückplatte

## Patentansprüche

1. Anlage zum Aufbringen einer Klebefolie auf einer Batteriezelle (12), mit einer Transporteinrichtung (4) für die Batteriezellen (12) mit mehreren Aufnahmenestern (41) mit Halteeinrichtungen (43, 45) für die Batteriezellen (12), zumindest einer Klebefolien-Bereitstellungseinheit (5), zumindest einer Klebefolien-Anpresseinheit (8) für eine der grossen Oberflächen, zumindest einer Klebefolien-Anpresseinheit (9) für die Schmalseiten und einer Batteriezellen-Wendeeinheit (10), **gekennzeichnet durch**:
a) eine Ablängeinheit (6) für Endlos-Klebefolie (52) mit einer Schneideeinheit (61) und vorzugsweise einer Greifereinheit (64 bis 66) mit zumindest einem in Folienlängsrichtung verfahrbaren Greifer (64) für die vordere Stirnseite der Klebefolie,
b) eine Manipulatoreinheit für ein abgetrenntes Klebefolien-Blatt (54), wobei die Manipulatoreinheit vertikal verfahrbare Haltereinrichtungen (71, 72) für Vorderende und Hinterende an beiden Seiten des Blattes (54) aufweist,
c) eine Transporteinrichtung (4) derart ausgelegt, dass die Aufnahmenester (41) vertikal unterhalb der Ablängeinheit (6) zu liegen kommen,
d) eine Steuereinheit für Halteeinrichtungen (71, 72), ausgelegt, um Haltereinrichtungen für Vorderende und Hinterende in unterschiedliche Höhe verfahren zu können, und
e) eine Klebefolien-Anpresseinheit (8), die entlang der Transporteinrichtung (4) mit dem Aufnahmenest (41) simultan mitbewegbar ist.

2. Anlage nach Anspruch 1, **gekennzeichnet durch** eine Wendeeinheit (10) mit zumindest einem 180° schwenkbaren Aufnahmenest (101 bzw. 102), dessen Schwenkachse vorzugsweise ausserhalb der Abmessungen des Aufnahmenestes (101 bzw. 102) liegt.

3. Anlage nach Anspruch 2, **gekennzeichnet durch** eine Wendeeinheit (10) mit zwei, einander bezüglich der Schwenkachse diametral gegenüberliegende Aufnahmenestern (101, 102).

4. Anlage nach Anspruch 2 oder 3, **gekennzeichnet durch** eine Wendeeinheit (10) mit Halteeinrichtungen (106, 107) mit grossflächiger Auflage für die Fixierung der Batteriezelle (12) während der Schwenkbewegung und Halteeinrichtungen (105) mit kleinflächiger Auflage für die Fixierung während des Übergabevorganges.

5. Anlage nach einem der Ansprüche 2 bis 4, **gekennzeichnet durch** eine Übergabeeinrichtung (11) zwischen Transporteinrichtung (4) und Wendeeinheit (10), mit Greifergabeln (114) unten und zumindest einer grossflächiger Auflage (116) oben, wobei alle Aufnahmenester (41) Ausnehmungen (46) für die Greifergabeln (114) der Übergabeeinrichtung aufweisen.

6. Anlage nach Anspruch 1, **gekennzeichnet durch** eine Greifereinheit (64 bis 66) mit einer über die Breite der Folie (52) durchgehenden Greifbacke.

7. Anlage nach Anspruch 1, **gekennzeichnet durch** eine mit mehreren entlang der Breite der Folie (52) verteilten und vorzugsweise separat ansteuerbaren Greifbacken (64).

8. Anlage nach Anspruch 1, **gekennzeichnet durch** eine Ablängeinheit (6) mit zumindest einem vertikal verfahrenden Messer 62), vorzugsweise an der Seite der nicht klebenden Oberfläche der Folie (52).

9. Anlage nach Anspruch 1, **gekennzeichnet durch** Aufnahmenester (41) für die Batteriezelle (12) mit quer zur Bewegungsrichtung der Aufnahmenester (41) horizontal verfahrbaren lösbaren Halteeinrichtungen (43, 45).

10. Verfahren zum Aufbringen einer Klebefolie auf einer Batteriezelle (12), umfassend die Schritte:
Bereitstellen eines Klebefolienblattes (54) mit grösseren Abmessungen als einer der Oberflächen der Batteriezelle (12),
Aufpressen eines Klebefolienblattes (54) auf eine Oberfläche der Batteriezelle (12),
Umschlagen und Aufpressen der überstehenden Ränder (55) des Klebefolienblattes (54),
Wenden der Batteriezelle (12) um 180°,
Wiederholung der obigen Schritte in gleicher Reihenfolge mit der gewendeten Batteriezelle, **gekennzeichnet durch** folgenden Schritte:
a) Bereitstellen einer Klebefolie (52) in Form eines Endlosbandes mit grösserer Breite als die Batteriezelle (12),
b) Ablängen eines Klebefolienblattes (54) mit grösserer Länge als die Batteriezelle (12) und Verbringen einer Batteriezelle (12) vertikal unter das Klebefolienblatt (54),
c) Aufbringen des Klebefolienblattes (54) auf eine grosse Oberfläche in gegen die Horizontale geneigter Stellung und Aufwalzen von einem Rand ausgehend bei gleichzeitigem Absenken des Klebefolienblattes (54),
d) Umschlagen und Aufwalzen des Längsrandes des Klebefolienblattes (54) während oder nach dem Weitertransport der Batteriezelle (12),
e) Umschlagen und Aufwalzen der Ränder (55) an den Schmalseiten nach dem Weitertransport, und
f) Wenden der Batteriezelle (12) durch Schwenken des Aufnahmenestes (101 bzw. 102) für die Batteriezelle (12) um 180° in einer durchgehenden Bewegung.

11. Verfahren nach Anspruch 10, **gekennzeichnet durch** das Bereitstellen eines leeren Aufnahmenestes (101 bzw. 102) in der Wendeeinheit (10) für eine weitere Batteriezelle (12) gleichzeitig mit dem Schwenken der bereits in der Wendeeinheit (10) befindlichen, einseitig beklebten Batteriezelle (12).

12. Verfahren nach Anspruch 10 oder 11, **gekennzeichnet durch** die Fixierung der einseitig beklebten Batteriezelle (12) für den Schwenkvorgang durch Andrücken über einen Grossteil der Länge der Zelle und über zumindest einen Teil der Breite der Zelle (12).

13. Verfahren nach Anspruch 10, **gekennzeichnet durch** Lösen und seitliches Verfahren der Transportfixierungen (43, 45) an den Aufnahmenestern (41) während der Walzvorgänge, horizontal und quer zur Bewegungsrichtung der Aufnahmenester (41).
